# EUROPEAN PATENT SPECIFICATION

(11) **EP 4 354 804 B1**
(45) Date of publication and mention of the grant of the patent: **07.08.2024**
(21) Application number: 22200658.7
(22) Date of filing: 10.10.2022
(51) Int. Cl.: H04L 12/12

(54) **NETWORK INTERFACE WITH DEACTIVATABLE AUTOMATIC BYPASS FUNCTIONALITY BETWEEN TWO NETWORK CONNECTORS**
NETZWERKSCHNITTSTELLE MIT DEAKTIVIERBARER AUTOMATISCHER BYPASS-FUNKTIONALITÄT ZWISCHEN ZWEI NETZWERKVERBINDERN
INTERFACE DE RÉSEAU AVEC FONCTIONNALITÉ DE DÉRIVATION AUTOMATIQUE DÉSACTIVABLE ENTRE DEUX CONNECTEURS DE RÉSEAU

(43) Date of publication of application: 17.04.2024
(73) Proprietor: Danfoss A/S, 6430 Nordborg (DK)
(72) Inventor: Dametto, Giulio, 6430 Nordborg (DK)
(74) Representative: Keil & Schaafhausen Patentanwälte PartGmbB

(56) References cited:
- EP-A1- 2 706 644
- US-A1- 2012 287 975
- US-A1- 2014 064 059

## Description

The present invention relates to a network interface, e. g. for an automation controller module, comprising a first network connector, a second network connector, and a connector-to-connector bypass unit. The invention further relates to an automation controller module with a network interface.

Different types of network topologies are known.

On the one hand, in many industrial grade applications, data communications between control devices are carried through slow-speed two-wire bus networks such as the Controller Area Network (CAN bus), the Local Operating Network (LON), and RS-485. The corresponding network topologies have some inherent fault-resiliencies: A dead or unpowered node is not bringing down the whole network; other nodes can continue with their communication. However, such bus two-wire networks typically allow limited data transfer rates only. Further, the handling of accessing the bus network is often very restricted, e.g. regarding transmission windows and handling of conflicts. Typically, such bus networks do not support multiplexing of multiple protocols over the same network and peer-to-peer networking.

On the other hand, ethernet networks are in use. The most ethernet networks employ a hub topology (also referred to as star topology). Ethernet networks allow comparatively high data transfer rates. Known ethernet networks exhibit a media access control layer, peer-to-peer full duplex networking and an open standard protocol stack. Ethernet networks exhibits a high flexibility. Multiplexing many different protocols in the same network can be supported, even the handling of different logical communication layers multiplexed over the same physical network. However, ethernet networks exhibit certain disadvantages. Ethernet cables are composed of four twisted pairs of wires. They are thicker and more expensive than cables with a single pair of copper wires, wherein the latter can suffice for the two-wire bus networks mentioned above. As ethernet networks typically based on the star topology, at least in sections, all corresponding ethernet cables need to be connected to one central node, e.g. an ethernet swich or hub. The star topology implies that the network is completely disrupted if the central node fails. Furthermore, the star topology typically leads in industrial applications to more difficulties in connecting all nodes with network cables. This increases the complexity and the costs.

One approach to reduce the costs and the complexity of connecting the various nodes with network cables is the so-called daisy-chaining. The ethernet star topology is essentially converted into a series of chained star topology segments. Each node being part of the chain (each "chain node") comprises at least two ethernet connectors and an ethernet switch unit connected to the two ethernet connectors. The ethernet switch unit allows the chain node to send and receive the network traffic concerning the respective chain node itself. Furthermore, the ethernet switch forwards the traffic bound for other nodes through the respective chain node. In principle, the daisy-chaining approach allows to connect all nodes of the network in series. This facilitates the network cable management.

However, there is still the problem that the whole ethernet network is interrupted if one of the chain nodes fails. Therefore, it has been proposed to provide an automatic bypass functionalities in the individual chain nodes. The automatic bypass functionality activates a bypass connection within the chain node between the at least two ethernet connectors of the chain node when the chain node is not supplied with electric power. Hence, if one of the chain nodes fail, the previous chain node and the subsequent chain node in the chain are still connected and the network is not completely interrupted.

This approach can be employed in an operation technology (OT) network. The OT network may include one or more automation controller modules as nodes, e.g. as chain nodes.

However, it is often required to couple the OT network, which may be such an ethernet based daisy-chaining network, with an external network, e.g. an Information technology (IT) network via a coupling node. When the coupling node is active, it manages and restricts the communication between the OT network and the IT network in order to protect the OT network. If the coupling node exhibits the automatic bypass functionality, the OT network will be directly electrically connected with the IT network in the case that the coupling node is not provided with electric power. This can lead to significant safety and security risks.

Therefore, the coupling node must be of a different type than the chain nodes that are only connected within the OT network. This results in increased costs and reduces the flexibility of using the same type of nodes for different purposes. For example, is not that easy to simply use a chain node at a new location different from the coupling node for coupling the OT network to the IT network. Instead, the coupling node has to be re-installed at the new location.

US 2012/0287975 A1 describes a network device including a connector connected to a network, a receiving line connected to the connector, and a transmitting line connected to the connector. A communication control unit is configured to control communication with an external network device by receiving a signal from the network through the connector and the receiving line, and transmitting the signal to the network through the transmitting line and the connector. A loop-back processing unit loops back the signal transmitted through the receiving line to the transmitting line when the communication control unit is in a power-off state or a standby state. The loop-back processing unit is a bypass connection featuring a switch, which connects the receiving and the transmitting line when switched on.

US 2014/0064059 A1 discloses a network backup device including a first connector configured to connect with one or more ports of a first network equipment, a second connector configured to connect with one or more network equipment, and a third connector configured to connect with a third network equipment. A switching module aggregates data transmitted from the second connector, transfers the aggregated data to the third connector, and distributes data transmitted from the third connector to the second connector. Further, a switch is configured to, in response to a fault occurring in a port of the first network equipment, switch from a connection between the second connector and the faulty port of the first network equipment to a connection between the second connector and the switching module. A bypass switch serves to directly connect the first connector and the second connector under the control of the controller when the network backup device is in non-operational state.

From EP 2 706 644 A1, methods, systems, and apparatuses for charging a host device from a charging source through an accessory are known. Upon detecting an input power signal from the charging source, an accessory may send an identification request to the host device and authenticate the host device based on the identification information received from the host device. Upon authenticating the host device, the accessory may enable a power path between the charging source and the host device to supply a charging current to charge the host device. Said power path is enabled/disabled by means of a bypass switch arranged in parallel to a resistive element.

The problem underlying the invention is to provide a network interface that is suitable for automation controllers modules and exhibits a high flexibility in use.

This problem is solved by a network interface, preferably for an automation controller module, according to claim 1.

The network interface comprises:
a first network connector;
a second network connector; and
a connector-to-connector bypass unit;
wherein the bypass unit comprises a monostable switching unit for enabling a bypass connection between the first network connector and the second network connector in a stable state and for disabling the bypass connection in a non-stable state;
wherein the bypass unit further comprises a bistable switching unit, wherein the bistable switching unit breaks, in a breaking state, the bypass connection.

The network interface exhibits a particularly high flexibility. When the bistable switching unit is not in its breaking state (i.e. in a connecting state), the bypass unit exhibits an automatic bypass functionality controlled by the monostable switch unit. Further, the automatic bypass functionality is reliably deactivated when the bistable switching unit is in the breaking state.

The same network interface can be used for different kind of applications.

On the one hand, the network interface (and any device employing it) can be used for a first kind of applications, in which the bypass connection shall automatically bridge the network traffic between the first network connector and the second network connector under certain circumstances, e.g. in the case of power failure, failure of the network interface (e.g. of an ethernet switch of the network connector) and/or failure of a device, in which the network interface is incorporated (e.g. an automation controller module). Even in case of such a failure, the network is not interrupted. Other nodes will be still connected by the network.

On the one hand, the network interface (and any device employing it) can be used for a second kind of applications, in which a network connected with the first network connector shall remain separated from another network connected with the second network connector.

As an example, both the first network connector and the second network connector may be connected to the same special purpose network, e.g. to the same OT network. The operation technology network is not interrupted and the other devices in the network can still communicate even if the network interface (and/or the device employing it) fail because the bypass unit automatically bridges the network between the first network connector and the second network connector in such a case.

For example, one of the first network connector and the second network connector may be connected to an external network while the other the one of the first network connector and the second network connector is connected to a specific purpose network.

The external network may be an IT network, a wide area network (WAN), e.g. the internet, a demilitarized zone (DMZ) network, a company wide network, or the like.

The specific purpose network may be an OT network, e.g. an automation network. It may employ an industrial communications protocol. It can be a fieldbus, for example.

According to the invention, the bistable switching unit can be switched between two stable states. One of them is the breaking state, in which the bistable switching unit reliably breaks the bypass connection. In other words, when the bistable switching unit is in its breaking state, it prevents that the first network connector and the second network connector can be connected via the bypass connection. Even if the monostable switching unit is in its stable state, the bistable switching state being in its breaking state breaks the bypass connection such that the bypass connection cannot be established. In still other words, the bistable switching unit is configured to break, in the breaking state, the bypass connection independently from the state of the monostable switching unit (i.e. whether the switching unit is in its stable state or in non-stable state). The bistable switching unit allows to deactivate the bypass functionality.

The other state of the bistable switching unit is a connecting state. In the connecting state, the bistable switching unit does not break the bypass connection. In other words, the automatic bypass functionality is activated (and controlled by the monostable switching unit).

The bypass connection is (only) enabled while
- the bistable switching unit is in its connecting state (i.e. not in the breaking state) and
- the monostable switching unit is in its stable state
at the same time. While enabled, the bypass connection may directly connect the first network connector and the second network connector. The bypass connection can be configured to directly convey network signals between the first network connector and the second network connector (in more detail from the first network connector and the second network connector and vice versa) when enabled. Especially, the network signals may be conveyed without any processing or the like. The activated and enabled bypass connection bridges the network between the first network connector and the network connector.

The monostable switching unit must be actively retained in the non-stable state. It may be configured to be in the non-stable state only while a predetermined condition is fulfilled. While the predetermined condition is not fulfilled, the monostable switching unit is automatically in the stable state.

As soon as the predetermined condition is no longer fulfilled, the monostable switching unit automatically switches from the non-stable state to the stable state and remains in the stable state until the predetermined condition is fulfilled again.

The predetermined condition may include that an opening signal is being applied to the first switching unit. The opening signal can be indicative of the predetermined condition, e.g. whether the network interface is supplied with power and/or whether an ethernet switch of the network interface is active. In this respect, network signals arriving at the first network connector and/or the second network connector might be not regarded as an electric power supply.

The network interface may comprise a condition input, e.g. a connector, for receiving the opening signal.

For example, the monostable switching unit is configured to be in the non-stable state while the opening signal is applied to the monostable switching unit. Otherwise, the monostable switching unit is automatically in the stable state.

The monostable switching unit is adapted to act as a power-loss and/or logic failure switching device. In contrast, the bistable switching unit provides a configuration change between a first mode, in which the automatic bypass functionality is allowed (activated) and a second mode, in which the automatic bypass functionality is deactivated.

The bistable switching unit remains stable both in the connecting state and the breaking state. Hence, it exhibits a configuration memory. Even after a complete power failure, the bistable switching unit remains in the same state.

According to the invention, with regard to the bypass connection, the monostable switching unit and the bistable switching unit are arranged in series. This approach is of low complexity, easy to implement, and cost-effective.

In general, the bistable switching unit may comprise at least one (preferably non-volatile) bistable switching element.

According to one aspect, bistable switching unit comprises at least one bistable relay. Relays are easy to implement and inexpensive.

The at least one bistable relay may be a bistable small signal relay. Small signal relays can handle particularly small voltages.

The at least one bistable relay can be a double pole double throw relay (DPDT relay). Additionally or alternatively, the bistable switching unit can comprise at least one bistable double pole single throw relay (DPST relay).

As most network wires include a number of wires corresponding to N • 2, where N is a natural number (1, 2, 3, ...), the use of double pole relays (DP) is cost-efficient, reduces the required spaces, and facilitates manufacturing compared to the use of single pole (SP) relays.

Each DPDT relay includes two relay terminals and four relay connectors, namely two relay connectors for each relay terminal. For each terminal, one of the two relay connectors may not form part of the bypass connection. They are referred to as "dead relay connectors". For example, they are simply not permanently electrically connected to any other element at all. If the DPDT relay is in its breaking state, the relay terminals are connected with the dead relay connectors. If the DPDT relay is in its connecting state, the relay terminals are connected with the other relay connectors, which may be referred to as "bypass relay connectors".

Naturally, the "dead relay connectors" are not needed at all. Accordingly, using bistable DPST relays is possible as well. However, bistable DPDT relays are particularly easily available and inexpensive.

Especially, the bistable switching unit may comprise at least two DPDT relays. Additionally or alternatively, the bistable switching unit may comprise at least two DPST relays.

In one embodiment, the bistable switching unit comprises at least one manual switch. The manual switch can only be manipulated by a person which can directly physically access the network interface.

In one embodiment, the bistable switching unit comprises at least one flip flop and an independent energy supply. The independent energy supply may include a battery, an electrical accumulator, and/or a solar cell, for example.

In one embodiment, the bistable switching unit comprises at least one floating gate metal-oxide-semiconductor field-effect transistor (floating gate MOSFET). A floating gate MOSFET can "store" a state even if no electric power is supplied.

In one embodiment, the bistable switching unit comprises at least one phase-change memory switch, e.g. working similar like a cell in a phase-change memory that employs chalcogenide glass.

In general, the monostable switching unit may comprise at least one monostable switching element, that automatically enables the bypass connection while the predetermined condition is not fulfilled and disables the bypass connection while the predetermined condition is fulfilled.

According to one aspect, the monostable switching unit comprises at least one monostable relay.

The at least one monostable relay can be a small signal relay.

The at least one monostable relay can be a monostable DPDT relay, e.g. a monostable DPDT signal relay. Additionally or alternatively, the monostable switching unit comprises at least one monostable double pole double throw relay (DPST relay), e.g. a monostable DPST signal relay. The relay terminals should be electrically connected with the relay connectors in the stable state.

According to one aspect, the network interface is configured such that the bistable switching unit can be switched, by switching signals, between the breaking state and the connecting state, which allows the bypass connection to be enabled by the monostable switching unit. For example, the network interface includes a switching input for receiving the switching signals from a processor and/or a microcontroller unit (MCU). The switching signals may comprise or consist of electric signals, e.g. electrical power pulses. A voltage drop can be inverse for the switching signal(s) for switching from the breaking state to the connecting state and the switching signal(s) for switching from the connecting state to the breaking state.

In one embodiment, the network interface (or a device including the network interface) is configured such that the bistable switching unit can be switched between the breaking state and the connecting state by software configuration.

According to another aspect, the network interface comprises an ethernet switch. The ethernet switch may be functionally coupled with the first network connector and the second network connector. It may be configured to control data reception and transmission via the first network connector and via the second network connector. The ethernet switch may be configured to forward network traffic between the first network connector and the second network connector. It can be adapted such that the network interface can be employed for daisy-chaining.

The ethernet switch may be configured to apply the opening signal to the monostable switching unit while the ethernet switch is active. When the ethernet switch is not active, for example due to power failure and/or because the ethernet switch itself fails, the opening signal is no longer applied to the monostable switching unit. As a consequence, the monostable switching unit then automatically switches to the stable state and remains in the stable state (unless the control signal is applied again). If the bistable switching unit is in the connecting state (not in the breaking state), the bypass connection is thereby automatically enabled.

According to a further aspect, the network interface may be configured to constitute a node in an ethernet network.

The ethernet switch may be provided with at least one media-access-control address (MAC address). It may be provided with a first MAC address for the first network connector and a second MAC address for the second network address. This facilitates to connect the network interface to two different networks, e.g. to the OT network and the external network.

According to one aspect, the ethernet switch is a three-port ethernet 100 Base-TX switch. A first ethernet switch port is functionally coupled with the first network connector, a second ethernet switch port is functionally coupled with the second network connector, and a third ethernet switch port is (at least configured to be) coupled with the processor and/or the MCU.

As noted above, the network interface can include the processor and/or the MCU. The processor and/or the MCU may include the ethernet switch.

In one embodiment, the network interface comprises a connector for connection with the processor and/or the MCU. For example, the MCU can be provided on a main circuit board of a device employing the network interface, e.g. an automation controller module.

According to an aspect, the network interface can be configured to support
- a first configuration, in which the first network connector and the second network connector are connected to the same network, e.g. the OT network, and
- a second configuration, in which one of the first network connector and the second network connecter is connected with a first network (e.g. the OT network), while the other one is connected to a different, second network (e.g. the external network).

In the first configuration, the bistable switching unit may be in the connecting state (automatic bypass functionality between the two network connectors activated). In the second configuration, the bistable switching unit may be in the breaking state (automatic bypass functionality between the two network connectors deactivated).

The network interface may be configured to constitute a node in the first network and a node in the second network in the second configuration/second mode.

In one embodiment, the first network connector includes at least one of the following:
- an RJ-45 connector,
- a GG45 connector,
- an RJ-11 connector,
- an RJ-22 connector,
- an RS-232 connector, and
- a 1 0base-T1L connector.

According to a further aspect, the second network connector may include at least one of the following:
- an RJ-45 connector,
- a GG45 connector,
- an RJ-11 connector,
- an RJ-22 connector,
- an RS-232 connector, and
- a 1 0base-T1L connector.

The first network connector may include a female network connector, e.g. a network connector jack. In one embodiment, the first network connector consists of only exactly one female network connector.

Additionally or alternatively, the second network connector may include a female network connector, e.g. a network connector jack. In one embodiment, the second network connector consists of only exactly one female network connector.

According to another aspect, the first network connector may include a male network connector, e.g. a network connector plug. In one embodiment, the first network connector consists of only exactly one male network connector.

Additionally or alternatively, the second network connector may include a male network connector, e. g. a network connector plug. In one embodiment, the second network connector consists of only exactly one male network connector.

As an example, a respective female network connector can be one of the following:
- an RJ-45 jack,
- a GG45 jack,
- an RJ-11 jack,
- an RJ-22 jack,
- an RS-232 female connector, and
- a 10base-T1L female connector.

As an example, a respective male network connector can be one of the following:
- an RJ-45 plug,
- a GG45 plug,
- an RJ-11 plug,
- an RJ-22 plug,
- an RS-232 male connector, and
- a 10base-T1L male connector.

In one embodiment, the first network connector and the second network connector of the same connection type (e.g. both are RJ-45 connectors). Especially, the first network connector and the second network connector may be of the same embodiment (e.g. both are RJ-45 jacks). Especially, the first network connector and the second network connector can be an ethernet 100 Base-TX jack, respectively.

The network interface can comprise a first galvanic isolation bridge means for (galvanic isolation of) the first network connector. The ethernet switch may be coupled with the first network connector via the first galvanic isolation means. For example, the first galvanic isolation bridge means may include magnetic transformer means and/or capacitive bridge means.

Additionally or alternatively, the network interface may comprise second galvanic isolation bridge means for (galvanic isolation of) the second network connector. The ethernet switch may be coupled with the second network connector via the second galvanic isolation bridge means. For example, the second galvanic isolation bridge means may include magnetic transformer means and/or capacitive bridge means.

The bypass unit may be connected with the first network connector in parallel with the first galvanic isolation bridge means. The bypass unit may be connected with the second network connector in parallel with the second galvanic isolation bridge means. Hence, the bypass connection bypasses the first galvanic isolation bridge means and/or the second galvanic isolation bridge means. The network signals can be conveyed by the bypass connection without being impaired by the first galvanic isolation bridge means and/or the second galvanic isolation bridge means.

In one embodiment, the first galvanic isolation bridge means is connected to the first network connector in parallel with the monostable switching unit. In other words, the monostable switching unit is (directly) connected to the first network connector in parallel with the first galvanic isolation bridge means. This especially applies if the monostable switching unit comprises or consists of at least one monostable DPST relay.

Alternatively, the first galvanic isolation bridge means is connected to the first network connector in series via the monostable switching unit. In other words, the monostable switching unit is (directly) connected with the first network connector in series between the first network connector and the first galvanic isolation bridge means. This is especially suitable if the monostable switching unit comprises or consists of at least one monostable DPDT relay. For example, the relay terminals are connected with the first network connector. For each relay terminal, a corresponding relay connector, which is in electrical communication with the respective relay terminal in the stable state, forms part of the bypass connection; the other corresponding relay connector is connected with the first galvanic isolation bridge means. Hence, the at least one DPDT relay connects the first network connector either with the bypass connection (in the stable state, thereby enabling the bypass connection) or with the first galvanic isolation bridge means (in the non-stable state, thereby disabling the bypass connection). This is suitable as the functional coupling between the first network connector and the ethernet switch might be obsolete while the bypass connection is enabled due to the ethernet switch being not active.

According to another aspect, the second galvanic isolation bridge means may be connected to the second network connector in parallel with the bistable switching unit. In other words, the bistable switching unit is connected with the second network connector in parallel with the second galvanic isolation bridge means.

The monostable switching unit may be directly connected with the bistable switching unit for forming the bypass connection.

According to another aspect, the network interface can include a printed circuit board, wherein at least the first network connector, the second network connector, the monostable switching unit, and the bistable switching unit are directly mounted on the printed circuit board. Furthermore, the ethernet switch, the first galvanic isolation bridge means, and/or the second galvanic isolation bridge means may be mounted on the printed circuit board. The bypass connection may extend in the circuit board. The electric connections between said elements can be formed by conductive traces within the PCB.

The problem mentioned above is further solved by an automation controller module including a network interface according to any one of the preceding claims. The automation controller module may further comprise
- at least one additional I/O connector (i.e. in addition to the first network connector and the second network connector) and/or
- a processor and/or a microcontroller unit (MCU).

The modifications and advantages described with regard to the interface network apply to the automation controller module accordingly, and vice versa.

The processor and/or the MCU may be connected with the network interface. For example, it is connected to the switching input and configured to send the switching signals. Additionally or alternatively, it is connected to the ethernet switch.

If the automation controller module includes the MCU, the MCU may comprise the processor.

The at least one additional I/O connector may include a cable clamp.

In one embodiment, the automation controller comprises a plurality of additional I/O connectors.

The automation controller module can be configured to form part of an automation controller system, e.g. for controlling climate systems, air conditioning systems, refrigerant systems, and/or industrial installations like production facilities.

In one embodiment, the automation controller module is configured to control external functional components including at least one of, several of, or all of the following:
- an actuator,
- a compressor,
- a valve, e.g. an expansion valve, and
- a fan.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows an embodiment of a network interface according to the present invention with a bypass unit with a monostable switching unit being in a non-stable state;
- Fig. 2: shows the network interface of Fig. 1, wherein a bistable switching unit of the bypass unit is in a breaking state and breaks a bypass connection between a first network connector and a second network connector although the monostable switching unit is in a stable state which would otherwise enable the bypass connection;
- Fig. 3: shows the bypass unit of the network interface in Fig. 1 in more detail;
- Fig. 4: schematically shows a modification of the network interface of Fig. 1, wherein a first galvanic isolation bridge means is connected to a first network connector via a monostable switching unit in series;
- Fig. 5: shows a perspective view of an automation controller unit including the network interface of Fig. 1; and
- Fig. 6: shows a cross-sectional view of the automation controller unit of Fig. 5 being mounted on a rail.

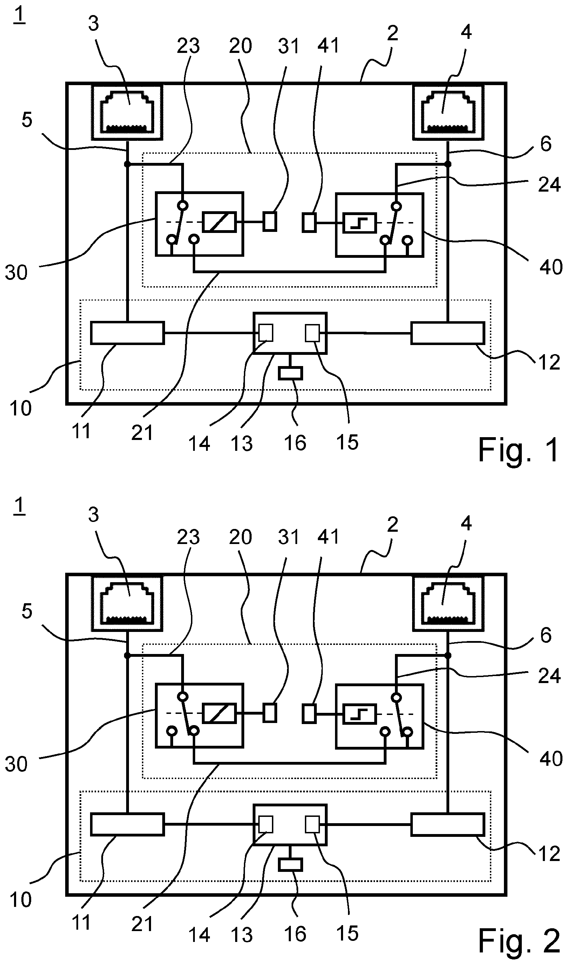

A network interface 1 shown in Fig. 1 includes printed circuit board (PCB) 2, a first network connector 3, a second network connector 4, a node function unit 10, and a bypass unit 20.

The node function unit 10 includes a first galvanic isolation bridge means 11, a second galvanic isolation bridge means 12, an ethernet switch 13, and a connector 16. The node function unit 10 may include a processor (not shown) in addition to the ethernet switch 13 or instead of the ethernet switch 13. In the latter case, the processor as such may include the functionality of the ethernet switch 13.

The ethernet switch 13 comprises a first ethernet switch port 14 and a second ethernet switch port 15. The ethernet switch 13 is functionally coupled with the first network connector 3. In more detail, the ethernet switch 13 (namely the first ethernet switch port 14) is connected to the first network port 3 via the first galvanic isolation bridge means 11. The first galvanic isolation bridge means 11 ensures galvanic isolation of the ethernet switch 13 from the first network connector 3 and vice versa but forwards network signals in both directions.

Similarly, the ethernet switch 13 is functionally coupled with the second network connector 4. In more detail, the ethernet switch 13 (namely the second ethernet switch port 15) is connected to the second network port 4 via the second galvanic isolation bridge means 12. The second galvanic isolation bridge means 12 ensures galvanic isolation of the ethernet switch 13 from the second network connector 4 and vice versa but forwards network signals in both directions.

In this exemplary embodiment, the first galvanic isolation bridge means 11 include first magnetic transformer means and/or first capacitive bridge means. Accordingly, the second galvanic isolation bridge means 12 include second magnetic transformer means and/or second capacitive bridge means

Optionally, the ethernet switch 13 includes a first media-access-control address (MAC) address for the first ethernet switch port 14 (and hence for the first network connector 3) and a second MAC address for the second ethernet switch port 15 (and hence for the second network connector 4).

A connector 16 of the node function unit 10 can be used for connecting the ethernet switch 13 with a processor and/or a microcontroller unit (MCU). The connector 16 can be a third port of the ethernet switch 13 or connected thereto.

The node function unit 10 allows the network interface 1 to constitute a node in a network. In particular, the network interface 1 can be used in an ethernet network with daisy-chaining, for example in an operation technology network (OT network).

It also allows the network interface 1 to work as nodes in two different networks. For example, the first network connector 3 can be coupled with an external network, such as the internet or a DMZ network, and the second network connector 4 can be coupled with the OT network at the same time. The ethernet switch 13 and/or the MCU connected thereto can handle data exchange between the external network and the OT network.

The bypass unit 20 is configured to enable a direct bypass connection between the first network connector 3 and the second network connector 4 under certain circumstances. If enabled, the bypass connection directly conveys network signals from the first network connector 3 to the second network connector 4 and vice versa, without processing or modifying them. When the bypass connection is enabled, it bypasses or "shortcuts" the node function unit 10 of the network interface 1. It is like if a first network cable connected to the first network connector 3 and a second network cable connected to the second network connector 4 would be replaced by one continuous network cable.

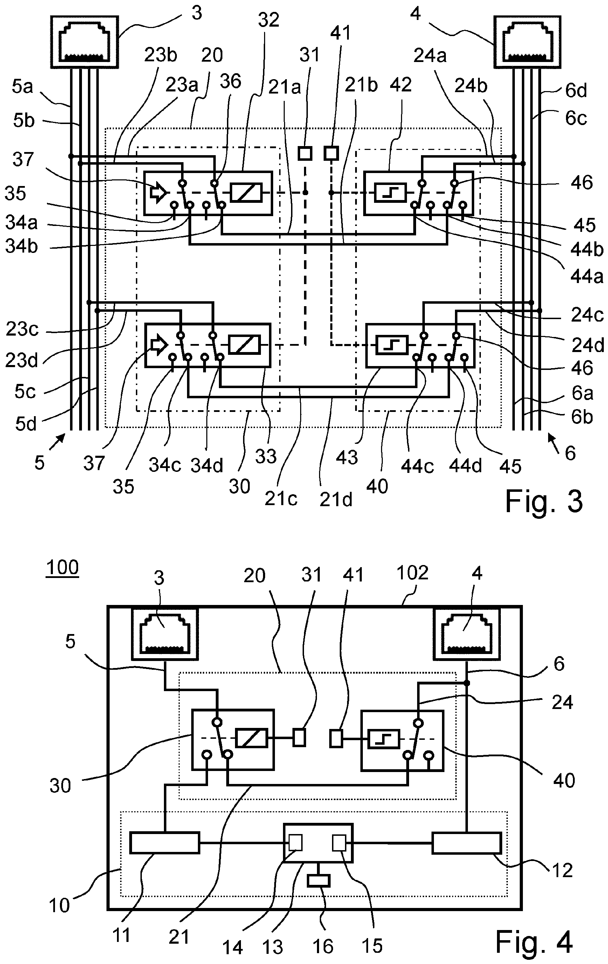

The bypass unit 20 comprises a monostable switching unit 30 and a bistable switching unit 40, which are directly connected with each other, in this example via bypass conductive traces 21 formed in the PCB 2. Fig. 3 shows several individual bypass conductive traces 21a, 21b, 21c, 21d.

The bypass unit 20 connects the first network connector 3 with the second network connector 4 via the monostable switching unit 30 and the bistable switching unit 40, wherein the monostable switching unit 30 and the bistable switching unit are connected in series in-between the first network connector 3 and the second network connector 4.

The monostable switching unit 30 is further directly connected to the first network connector 3. In this example, it is connected to the first network connector 3 in parallel with the first galvanic isolation bridge means 11.

In the embodiment shown in Fig. 1, the node function unit 10 - namely the first galvanic isolation bridge means 11 - is directly connected with the first network connector 3 via first conductive traces 5 formed in the PCB 2. Fig. 3 shows several individual first conductive traces 5a, 5b, 5c, 5d. First branch off traces 23 formed in the PCB 2 connect the monostable switching unit 30 with the first conductive traces 5 or directly with the first network connector 3. Fig. 3 shows several individual first branch off traces 23a, 23b, 23c, 23sd.

Similarly, the bistable switching unit 40 is also directly connected to the second network connector 4 in parallel with the second galvanic isolation bridge means 12.

The node function unit 10 - namely the second galvanic isolation bridge means 12 - is directly connected with the second network connector 4 via second conductive traces 6 formed in the PCB 2. Fig. 3 shows several individual second conductive traces 6a, 6b, 6c, 6d. Second branch off traces 24 formed in the PCB 2 connect the bistable switching unit 40 with the second conductive traces 6 or directly with the second network connector 4. Fig. 3 shows several individual second branch off traces 24a, 24b, 24c, 24d.

Naturally, the number of the individual traces may be the same with regard to the first conductive traces 5, 5a to 5d, the second conductive traces 6, 6a to 6d, the bypass conductive traces 21, 21a to 21d, the first branch off traces 23, 23a to 23d, and the second branch off traces 24, 24a to 24d. Said number may be referred to as trace number. The trace number may be 2, 4, or 8, for example. The trace number can correspond to N • 2, wherein N is a number of wire pairs of network cables that can be coupled to the first network connector 3 and/or the second network connector 4.

The bypass unit 20 further comprises a switching input 41 for receiving switching signals for the bistable switching unit 40. By applying the switching signals, the bistable switching unit 40 can be switched between two stable states, a breaking state and a connecting state. "Bistable" may mean, in this regard, that the switching unit 40 only changes its state when a switching signal is applied. As long as no switching signal is applied, the bistable switching unit 40 remains in the present state, despite of whether the present state is the breaking state or the connecting state. The bistable switching unit 40 is also non-volatile. In other words, as long as no switching signal is applied, the bistable switching unit 40 remains in the present state even in the case of complete power failure.

The bistable switching unit 40 exhibits a "configuration memory" regarding whether it is in the breaking state or in the connecting state.

When the bistable switching unit 40 is in the connecting state as shown in Figs. 1, 3, and 4, it connects the bypass conductive traces 21 and hence the monostable switching unit 30 directly with second network connector 4.

When the bistable switching unit 40 is in the breaking state as shown in Fig. 2, it breaks the bypass connection. In more detail, it then disconnects the bypass conductive traces 21 from the second network connector 4.

For example, current pulses can be used as switching signals for switching the bistable switching unit 40 between the connecting state and the breaking state. This allows to switch between those state via the MCU being connected with the switching input 41. As a result, it is possible to switch between the connecting state and the breaking state by software configuration. As long as no new switching signal is applied, the bistable switching unit 40 will then remain in the present state, independently whether it is the breaking state or the connecting state, even in the case of complete power failure.

The bypass unit 20 further comprises a condition input 31 for receiving an opening signal for the monostable switching unit 30.

While the opening signal is applied to the monostable switching unit 30, the switching unit 30 is in a non-stable state, which is depicted in Fig. 1. In the non-stable state, the monostable switching unit 30 disables the bypass connection between the first network connector 3 and the second network connector 4. In this embodiment, the monostable switching unit 30 disconnects the bypass conductive traces 21 from first network connector 3 when it is in the non-stable state.

While the opening signal is not applied to the monostable switching unit 30, e.g. during power failure and/or during other types of failure of the node function unit 10 (or at least one part thereof), the monostable switching unit 30 is automatically in a stable state. The stable state is shown in Figs. 2, 3, and 4. In its stable state, the monostable switching unit 30 connects the first connector 3 to the bypass conductive traces 21 and hence to the bistable switching unit 40. Assumed that the bistable switching unit 40 is in its connecting state, the monostable switching unit 30 automatically enables the bypass connection between the first network connector 3 and the second network connector 4 when it is in the stable state. The bypass connection extends at least via the first branch off traces 23, 23a to 23d, the monostable switching unit 30, the bypass conductive traces 21, 21a to 21d, the bistable switching unit 40, and the second branch off traces 24, 24a to 24d.

The opening signal can be, for example, a simple power supply indication. If the power supply to the network interface 1 fails, the node function unit 10 does not work. The ethernet switch 13 cannot send data in this situation. In particular, it cannot forward received network signals, which are bound for other nodes, between the first network connector 3 and the second network connector 4. If the first network connector 3 and the second network connector 4 are coupled to the same network in a daisy-chaining manner, this network is interrupted at the location of the network interface 1 in this situation. The bypass connection, which is automatically enabled by the monostable switching unit 30 (assumed that the bistable switching unit 40 is in the connecting state), solves this problem - the inactive node function unit 10 is bypassed.

However, if the first network connector 3 and the second network connector 4 are coupled to different networks, which shall be kept separate (e.g. due to security/safety considerations), it is possible to reliably deactivate the bypass functionality. For doing so, the bistable switching unit 40 is brought in its breaking state, e.g. due to a corresponding switching signal. While it is in the breaking state, the bistable switching unit 40 prevents that the bypass connection can be enabled.

The additional bistable switching allows to arbitrarily switch between a first mode, in which the automatic bypass functionality is activated (e.g. as daisy-chaining fallback) and a second mode, in which the automatic bypass functionality is deactivated.

Fig. 3 shows more details of a possible implementation of the bypass unit 20 in Figs. 1 and 2. In this example, the trace number is four and the monostable switching unit 30 comprises two monostable dual pole double throw small signal relays 32, 33 (referred to as monostable DPDT relays 32, 33) whereas the bistable switching unit 40 comprises two bistable double pole double throw small signal relays 42, 43 (referred to as bistable DPDT relays 42, 43).

Each of the DPDT relays 32, 33, 42, 43 includes two relay terminals 36, 46 and, for each relay terminal 36, 46, two corresponding relay connectors 34a to 34d, 35, 44a to 44d, 45.

Arrows 37 indicate that the monostable DPDT relays 32, 33 automatically shift to their respective stable state shown in Fig. 3 when the opening signal is no longer applied via the condition input 31 and will automatically remain in the stable state while the opening signal is not applied (again). In contrast, the bistable DPDT relays 42, 43 will change their states only if the switching signal is applied via the switching input 41.

In Fig. 3, the relay terminals 36 of the monostable DPDT relays 32, 33 are connected to the first network connector 3 in parallel to the first magnet transfer means 11 (the latter not being shown in Fig. 3 but in Figs. 1 and 2). For each relay terminal 36, one of the two corresponding relay connectors is connected to one of the bypass connection traces 21a, 21b, 21c, 21d - these are referred to as "bypass relay connectors" 34a, 34b, 34c, 34d; the other ones are actually not used in Fig. 3 and are referred to as "dead relay connectors" 35.

In the stable state, the monostable DPDT relays 32, 33 connect their relay terminals 36 with the bypass relay connectors 34a to 34d in order to enable the bypass connection. In the non-stable state, the monostable DPDT relays 32, 33 connect their relay terminals 36 with the dead relay connectors 35. This disables the bypass connection in any case.

The relay terminals 46 of the bistable DPDT relays 42, 43 are connected to the second network connector 4 in parallel to the second magnet transfer means 12 (the latter not being shown in Fig. 3 but in Figs. 1 and 2). For each relay terminal 46, one of the two corresponding relay connectors is connected to one of the bypass connection traces 21a, 21b, 21c, 21d - these are referred to as "bypass relay connectors" 44a, 44b, 44c, 44d; the other ones are not used and are referred to as "dead relay connectors" 45.

In the connecting state, the bistable DPDT relays 42, 43 connect their relay terminals 46 with their bypass relay connectors 44a to 44d. The bypass connection can be enabled by the monostable switching unit 30 being in the stable state.

In the breaking state, the bistable DPDT relays 42, 43 connect their relay terminals 46 with their dead relay connectors 46. The bypass functionality is completely deactivated such that it cannot be enabled by the monostable switching unit 30 being in the stable state.

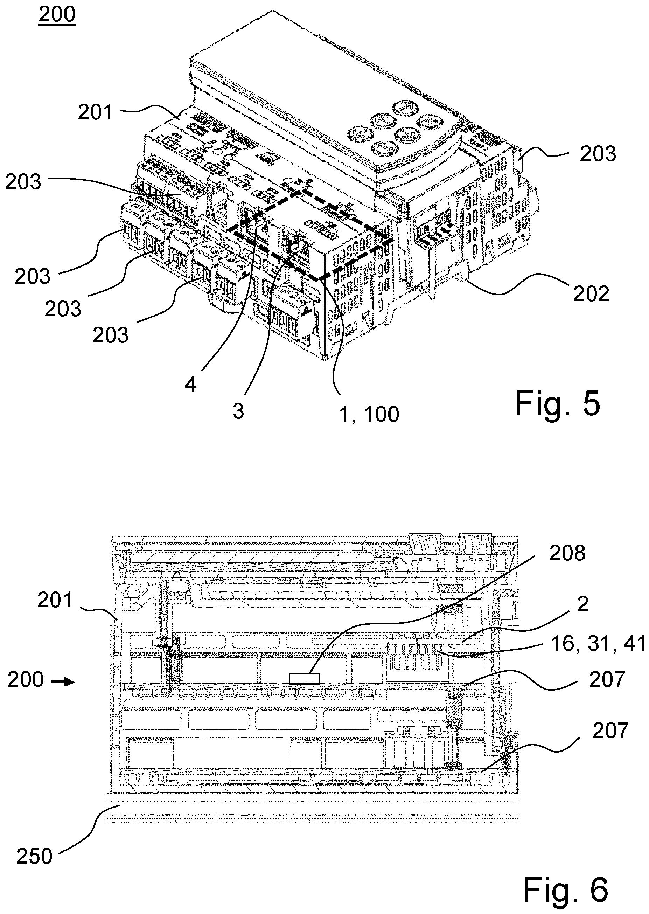

The connector 16, the signal input 31, and/or the switching input 41 can use a common hardware connector, e.g. a pin assembly or a female head pin socket (see Fig. 6).

In a modified network interface 100 shown in Fig. 4, the node function unit 10 - namely the first galvanic isolation bridge means 11 - is connected with the first network connector 3 in series with the monostable switching unit 30.

During In the case of complete power failure and/or failure of the node function unit 10, the connection between the first network connector 3 and the node function unit 10 (namely the first galvanic isolation bridge means 11) is not needed. Therefore, it is allowed that the monostable switching unit 30 breaks this connection when it is in its stable state.

Apart from that, the network interface 100 shown in Fig. 4 corresponds to the network interface 1 shown in Fig. 1 and the same reference sings are used.

Considering Fig. 3 in light of the modification according to Fig. 4, the parts of the first conductive traces 5, 5a to 5d below the junctions with the branch off traces 23, 23a to 23d are omitted. Instead, the "dead relay contacts" 35 of the monostable DPDT relays 32, 33 in Fig. 3 are connected with the node function unit 10 (namely the first galvanic isolation bridge means 11). The modified PCB 102 is adapted accordingly.

Fig. 5 shows an automation controller module 200, including the network interface 1 of Fig. 1 or the modified network interface 100 according to Fig. 4. Most components are embedded in an interior of a housing 201 of the automation controller module 200. However, the first network connector 3 and the second network connector 4 can be seen in Fig. 5. In this example, both the first network connector 3 and the second network connector 4 are RJ-45 or GG-45 jacks.

In addition to the first network connector 3 and the second network connector 4, the automation controller module 200 comprises a plurality input/output (I/O) connectors. For example, it comprises a plurality of digital I/O connectors 203. The I/O connectors 203 are depicted as cable clamps in this embodiment.

The I/O connectors 203 can be connected to sensors and/or to operational components, e.g. actuators, valves, fans, compressors, fluid mixers, and/or the like. The automation controller module 200 is configured to provide control signals (e.g. via the I/O connectors 203) for controlling the operational components based on information received from I/O connectors 203, the first network port 3, and/or the second network port 4.

The automation controller module 200 is configured to be mounted on a standardized rail 250 for mounting controller modules, e.g. a rail according to IEC/EN 60715. The housing 201 comprises a mounting section 202 for mounting the automation controller module 200 onto the rail 250. Fig. 6 shows a cross-sectional view of the controller module system 200 mounted on the rail 250 along a longitudinal cross-section plane. In addition to the PCB 2 of the network interface 1, 100, the automation controller 200 comprises at least one further PCB 207 (actually two in the depicted embodiment). The at least one further PCB 207 includes a microcontroller unit 208. The at least one further PCB 207 and especially the MCU 208 are connected with the network interface 1, 100. For example, the MCU 208 can apply the switching signal to the bistable switching unit 40, allowing to configure via software whether the network interface 1, 100 is in the first mode or in the second mode. Furthermore, the MCU 208 is operatively connected with the ethernet switch 13 such that data can be transferred between the MCU 208 and the first network connector 3 and the second network connector 4.

### List of reference signs:

- 1, 100: network interface
- 2, 102: printed circuit board (PCB)
- 3: first network connector
- 4: second network connector
- 5, 5a, 5b, 5c, 5d: first conductive traces
- 6, 6a, 6b, 6c, 6d: second conductive traces
- 10: node function unit
- 11: first galvanic isolation bridge means
- 12: second galvanic isolation bridge means
- 13: ethernet switch
- 14: first ethernet switch port
- 15: second ethernet switch port
- 16: connector
- 20: bypass unit
- 21, 21a to 21d: bypass conductive traces
- 23, 23a to 23d: first branch off traces
- 24, 24a to 24d: second branch off traces
- 30: monostable switching unit
- 31: condition input
- 32, 33: monostable switching relay
- 34a, 34b, 34c, 34d: bypass relay connector
- 35: dead relay connector
- 36: relay terminal
- 37: arrow
- 40: bistable switching unit
- 41: switching input
- 42, 43: bistable relay
- 44a, 44b, 44c, 44d: bypass relay connector
- 45: dead relay connector
- 46: relay terminal
- 200: automation controller module
- 201: housing
- 202: mounting section 202
- 203: (digital) I/O connector
- 207: printed circuit board (PCB)
- 208: microcontroller unit (MCU)
- 250: rail

## Claims

1. Network interface (1; 100) comprising:
a first network connector (3);
a second network connector (4); and
a connector-to-connector bypass unit (20);
wherein the bypass unit (20) comprises a monostable switching unit (30) for enabling a bypass connection between the first network connector (3) and the second network connector (4) in a stable state and for disabling the bypass connection in a non-stable state;
**characterized in that** the bypass unit (20) further comprises a bistable switching unit (40), wherein the bistable switching unit (40) is switchable between two stable states, namely a breaking state and a connection state, and breaks, in the breaking state, the bypass connection and, in its connecting state, does not break the bypass connection,
wherein the monostable switching unit (30) and the bistable switching unit (40) are arranged in series and wherein the bypass connection is only enabled while
- the bistable switching unit (40) is in its connecting state and
- the monostable switching unit (30) is in its stable state
at the same time.

2. Network interface (1; 100) according to claim 1, wherein bistable switching unit (40) comprises at least one bistable relay (42, 43).

3. Network interface (1; 100) according to claim 2, wherein the at least one bistable relay (42, 43) is a double pole double throw bistable signal relay.

4. Network interface (1; 100) according to any one of the preceding claims, wherein monostable switching unit (30) comprises at least one monostable relay (32, 33).

5. Network interface (1; 100) according to claim 4, wherein the at least one monostable relay (32, 33) is a double pole double throw monostable signal relay.

6. Network interface (1; 100) according to any one of the preceding claims, wherein the network interface (1; 100) is configured such that the bistable switching unit (40) can be switched, by electric switching signals, between the breaking state and a connecting state, which allows the bypass connection to be enabled by the monostable switching unit (30).

7. Network interface (1; 100) according to any one of the preceding claims, wherein the network interface (1; 100) comprises an ethernet switch (13) that is functionally coupled with the first network connector (3) and the second network connector (4).

8. Network interface (1; 100) according to any one of the preceding claims, wherein the first network connector (3) includes at least one of the following:
• an RJ-45 connector (3),
• a GG45 connector,
• an RJ-11 connector,
• an RJ-22 connector,
• an RS-232 connector, and
• a 10base-T1L connector.

9. Network interface (1; 100) according to any one of the preceding claims, wherein the second network connector (4) includes at least one of the following:
• an RJ-45 connector (4),
• a GG45 connector,
• an RJ-11 connector,
• an RJ-22 connector,
• an RS-232 connector, and
• a 10base-T1L connector.

10. Network interface (1; 100) according to any one of the preceding claims, wherein the first network connector (3) and the second network connector (4) are of the same type.

11. Network interface (1; 100) according to any one of the preceding claims, wherein the network interface (1; 100) comprises first galvanic isolation bridge means (11) for the first network connector (3), wherein the first galvanic isolation bridge means (11) is connected to the first network connector (3)
- in parallel with the monostable switching unit (30) or
- in series via the monostable switching unit (30).

12. Network interface (1; 100) according to any one of the preceding claims, wherein the network interface (1; 100) comprises second galvanic isolation bridge means (12) for the second network connector (4), wherein the second galvanic isolation bridge means (12) is connected to the second network connector (4) in parallel with the bistable switching unit (40).

13. Network interface (1; 100) according to any one of the preceding claims, wherein the network interface (1; 100) includes a printed circuit board (2), wherein at least the first network connector (3), the second network connector (4), the monostable switching unit (30), and the bistable switching unit (40) are directly mounted on the printed circuit board (2).

14. Network interface (1; 100) according to any one of the preceding claims, wherein the network interface (1; 100) comprises a connector (16, 31, 41) for connection with a micro-controller unit (208).

15. An automation controller (200) including a network interface (1; 100) according to any one of the preceding claims and,
- at least one additional I/O connector (203) and/or
- a processor and/or a microcontroller unit (208).

## Patentansprüche

1. Netzwerkschnittstelle (1; 100), umfassend:
einen ersten Netzwerkverbinder (3);
einen zweiten Netzwerkverbinder (4); und
eine Verbinder-zu-Verbinder-Bypass-Einheit (20);
wobei die Bypass-Einheit (20) eine monostabile Schalteinheit (30) umfasst, um eine Bypass-Verbindung zwischen dem ersten Netzwerkverbinder (3) und dem zweiten Netzwerkverbinder (4) in einem stabilen Zustand zu aktivieren und die Bypass-Verbindung in einem nichtstabilen Zustand zu deaktivieren;
**dadurch gekennzeichnet, dass** die Bypass-Einheit (20) ferner eine bistabile Schalteinheit (40) umfasst, wobei die bistabile Schalteinheit (40) zwischen zwei stabilen Zuständen, nämlich einem Unterbrechungszustand und einem Verbindungszustand, umgeschaltet werden kann, und im Unterbrechungszustand die Bypass-Verbindung unterbricht und im Verbindungszustand die Bypass-Verbindung nicht unterbricht,
wobei die monostabile Schalteinheit (30) und die bistabile Schalteinheit (40) in Reihe angeordnet sind und wobei die Bypass-Verbindung nur aktiviert wird während gleichzeitig
- die bistabile Schalteinheit (40) in ihrem Verbindungszustand ist und
- die monostabile Schalteinheit (30) in ihrem stabilen Zustand ist.

2. Netzwerkschnittstelle (1; 100) nach Anspruch 1, wobei die bistabile Schalteinheit (40) mindestens ein bistabiles Relais (42, 43) umfasst.

3. Netzwerkschnittstelle (1; 100) nach Anspruch 2, wobei das mindestens eine bistabile Relais (42, 43) ein doppelt umlegendes zweipoliges bistabiles Signalrelais ist.

4. Netzwerkschnittstelle (1; 100) nach einem der vorhergehenden Ansprüche, wobei die monostabile Schalteinheit (30) mindestens ein monostabiles Relais (32, 33) umfasst.

5. Netzwerkschnittstelle (1; 100) nach Anspruch 4, wobei das mindestens eine monostabile Relais (32, 33) ein doppelt umlegendes zweipoliges monostabiles Signalrelais ist.

6. Netzwerkschnittstelle (1; 100) nach einem der vorhergehenden Ansprüche, 10 wobei die Netzwerkschnittstelle (1; 100) so ausgebildet ist, dass die bistabile Schalteinheit (40) durch elektrische Schaltsignale zwischen dem Unterbrechungszustand und einem Verbindungszustand, der die Aktivierung der Bypass-Verbindung durch die monostabile Schalteinheit (30) ermöglicht, umgeschaltet werden kann.

7. Netzwerkschnittstelle (1; 100) nach einem der vorhergehenden Ansprüche, wobei die Netzwerkschnittstelle (1; 100) einen Ethernet-Switch (13) umfasst, der funktional mit dem ersten Netzwerkverbinder (3) und dem zweiten Netzwerkverbinder (4) gekoppelt ist.

8. Netzwerkschnittstelle (1; 100) nach einem der vorhergehenden Ansprüche, wobei der erste Netzwerkverbinder (3) mindestens eines von dem Folgenden aufweist:
• ein RJ-45-Verbinder (3),
• ein GG45-Verbinder,
• ein RJ-11-Verbinder, 25
• ein RJ-22-Verbinder,
• ein RS-232-Verbinder und
• ein 10Base-T1L-Verbinder.

9. Netzwerkschnittstelle (1; 100) nach einem der vorhergehenden Ansprüche, wobei der zweite Netzwerkverbinder (4) mindestens eines von dem Folgenden aufweist:
• ein RJ-45-Verbinder (4),
• ein GG45-Verbinder,
• ein RJ-11-Verbinder,
• ein RJ-22-Verbinder,
• ein RS-232-Verbinder, und
• ein 10Base-T1L-Verbinder.

10. Netzwerkschnittstelle (1; 100) nach einem der vorhergehenden Ansprüche, wobei der erste Netzwerkverbinder (3) und der zweite Netzwerkverbinder (4) vom gleichen Typ sind.

11. Netzwerkschnittstelle (1; 100) nach einem der vorhergehenden Ansprüche, wobei die Netzwerkschnittstelle (1; 100) erste Brückenmittel (11) zur galvanischen Trennung für den ersten Netzwerkverbinder (3) umfasst, wobei die ersten Brückenmittel (11) zur galvanischen Trennung mit dem ersten Netzwerkverbinder (3)
- parallel zur monostabilen Schalteinheit (30) oder
- in Reihe über die monostabile Schalteinheit (30) verbunden sind.

12. Netzwerkschnittstelle (1; 100) nach einem der vorhergehenden Ansprüche, wobei die Netzwerkschnittstelle (1; 100) zweite Brückenmittel (12) zur galvanischen Trennung für den zweiten Netzwerkverbinder (4) umfasst, wobei die zweiten Brückenmittel (12) zur galvanischen Trennung parallel zur bistabilen Schalteinheit (40) mit dem zweiten Netzwerkverbinder (4) verbunden sind.

13. Netzwerkschnittstelle (1; 100) nach einem der vorhergehenden Ansprüche, wobei die Netzwerkschnittstelle (1; 100) eine Leiterplatte (2) aufweist, wobei mindestens der erste Netzwerkverbinder (3), der zweite Netzwerkverbinder (4), die monostabile Schalteinheit (30), und die bistabile Schalteinheit (40) direkt auf der Leiterplatte (2) montiert sind.

14. Netzwerkschnittstelle (1; 100) nach einem der vorhergehenden Ansprüche, wobei die Netzwerkschnittstelle (1; 100) einen Verbinder (16, 31, 41) zur Verbindung mit einer Mikrocontrollereinheit (208) umfasst.

15. Automatisierungssteuerung (200), aufweisend eine Netzwerkschnittstelle (1; 100) nach einem der vorhergehenden Ansprüche, und
- mindestens einen zusätzlichen E/A-Verbinder (203), und/oder
- einen Prozessor, und/oder eine Mikrocontrollereinheit (208).

## Revendications

1. Interface de réseau (1 ; 100) comprenant :
un premier connecteur de réseau (3) ;
un second connecteur de réseau (4) ; et
une unité de dérivation connecteur à connecteur (20),
dans laquelle l'unité de dérivation (20) comprend une unité de commutation monostable (30) pour valider une connexion de dérivation entre le premier connecteur de réseau (3) et le second connecteur de réseau (4) dans un état stable et pour invalider la connexion de dérivation dans un état non stable ;
**caractérisée en ce que** l'unité de dérivation (20) comprend en outre une unité de commutation bistable (40),
dans laquelle l'unité de commutation bistable (40) peut être commutée entre deux états stables, à savoir un état de rupture et un état de connexion, et elle rompt, dans l'état de rupture, la connexion de dérivation et, dans son état de connexion, elle ne rompt pas la connexion de dérivation,
dans laquelle l'unité de commutation monostable (30) et l'unité de commutation bistable (40) sont agencées en série et dans laquelle la connexion de dérivation est seulement validée tandis que
- l'unité de commutation bistable (40) est dans son état de connexion et
- l'unité de commutation monostable (30) est dans son état stable
en même temps.

2. Interface de réseau (1 ; 100) selon la revendication 1, dans laquelle l'unité de commutation bistable (40) comprend au moins un relais bistable (42, 43).

3. Interface de réseau (1 ; 100) selon la revendication 2, dans laquelle l'au moins un relais bistable (42, 43) est un relais de signal bistable bipolaire bidirectionnel.

4. Interface de réseau (1 ; 100) selon l'une quelconque des revendications précédentes, dans laquelle l'unité de commutation monostable (30) comprend au moins un relais monostable (32, 33).

5. Interface de réseau (1 ; 100) selon la revendication 4, dans laquelle l'au moins un relais monostable (32, 33) est un relais de signal monostable bipolaire bidirectionnel.

6. Interface de réseau (1 ; 100) selon l'une quelconque des revendications précédentes, dans laquelle l'interface de réseau (1 ; 100) est configurée de telle sorte que l'unité de commutation bistable (40) puisse être commutée, par des signaux de commutation électriques, entre l'état de rupture et un état de connexion, ce qui permet que la connexion de dérivation soit validée par l'unité de commutation monostable (30).

7. Interface de réseau (1 ; 100) selon l'une quelconque des revendications précédentes, dans laquelle l'interface de réseau (1 ; 100) comprend un commutateur Ethernet (13) qui est couplé fonctionnellement au premier connecteur de réseau (3) et au second connecteur de réseau (4).

8. Interface de réseau (1 ; 100) selon l'une quelconque des revendications précédentes, dans laquelle le premier connecteur de réseau (3) inclut au moins un connecteur parmi les suivants :
• un connecteur RJ-45(3),
• un connecteur GG45,
• un connecteur RJ-11,
• un connecteur RJ-22,
• un connecteur RS-232, et
• un connecteur 10BASE-T1L.

9. Interface de réseau (1 ; 100) selon l'une quelconque des revendications précédentes, dans laquelle le second connecteur de réseau (4) inclut au moins un connecteur parmi les suivants :
• un connecteur RJ-45(4),
• un connecteur GG45,
• un connecteur RJ-11,
• un connecteur RJ-22,
• un connecteur RS-232, et
• un connecteur 10BASE-T1L.

10. Interface du réseau (1 ; 100) selon l'une quelconque des revendications précédentes, dans laquelle le premier connecteur de réseau (3) et le second connecteur de réseau (4) sont du même type.

11. Interface de réseau (1 ; 100) selon l'une quelconque des revendications précédentes, dans laquelle l'interface de réseau (1 ; 100) comprend un premier moyen de pont d'isolation galvanique (11) pour le premier connecteur de réseau (3), dans laquelle le premier moyen de pont d'isolation galvanique (11) est connecté au premier connecteur de réseau (3)
- en parallèle à l'unité de commutation monostable (30) ou
- en série via l'unité de commutation monostable (30) .

12. Interface de réseau (1 ; 100) selon l'une quelconque des revendications précédentes, dans laquelle l'interface de réseau (1 ; 100) comprend un second moyen de pont d'isolation galvanique (12) pour le second connecteur de réseau (4), dans laquelle le second moyen de pont d'isolation galvanique (12) est connecté au second connecteur de réseau (4) en parallèle à l'unité de commutation bistable (40).

13. Interface de réseau (1 ; 100) selon l'une quelconque des revendications précédentes, dans laquelle l'interface de réseau (1 ; 100) inclut une carte de circuit imprimé (2), dans laquelle au moins le premier connecteur de réseau (3), le second connecteur de réseau (4), l'unité de commutation monostable (30) et l'unité de commutation bistable (40) sont montés directement sur la carte de circuit imprimé (2).

14. Interface de réseau (1 ; 100) selon l'une quelconque des revendications précédentes, dans laquelle l'interface de réseau (1 ; 100) comprend un connecteur (16, 31, 41) pour une connexion avec une unité de microcontrôleur (208).

15. Contrôleur d'automatisation (200) incluant une interface de réseau (1 ; 100) selon l'une quelconque des revendications précédentes et
- au moins un connecteur I/O additionnel (203) et/ou
- un processeur et/ou une unité de microcontrôleur (208) .
